# EUROPÄISCHE PATENTANMELDUNG

(11) **EP 1 037 394 A1**
(43) Veröffentlichungstag der Anmeldung: **20.09.2000**
(21) Anmeldenummer: 99810231.3
(22) Anmeldetag: 15.03.1999
(51) Int. Cl.: H04B 1/69, H02J 13/00

(54) **Verfahren und Einrichtung zur Synchronisation von Feldgeräten**

(71) Anmelder: ABB RESEARCH LTD., 8050 Zürich (CH)
(72) Erfinder: Dzung, Dacfey, 5430 Wettingen (CH); Kirrmann, Hubert, 5405 Baden (CH)
(74) Vertreter: ABB Patent Attorneys

(57) **Zusammenfassung**

Die Messungen von Vorgängen in elektrischen Anlagen müssen zeitlich genau synchronisiert sein, damit korrekte Schlüsse über den Zustand der Anlage gezogen werden können. Die Synchronisation von Feldgeräten über ihren Kommunikationsbus (26) ist nicht möglich bei nichtdeterministischen Bussen, oder wenn eine Anlage verschiedene Bussegmente mit asynchronen Bustreibern aufweist. Eine erfindungsgemässes Synchronisationsverfahren und eine Einrichtung erlauben die zeitliche Synchronisation von mehreren Feldgeräten (20), die über einen Kommunikationsbus (26) miteinander verbunden sind. Dazu wird in einem Referenzgerät (10) ein Zeitsignal (16) erzeugt und über ein Übertragungsmedium (17) ausgestrahlt. In den einzelnen Feldgeräten (20) wird damit eine lokale Uhr (21) synchronisiert und eine lokale Elektronik (25) mit Zeitinformation versehen.

## Beschreibung

### Technisches Gebiet

Die Erfindung bezieht sich auf das Gebiet der Leittechnik. Sie bezieht sich auf ein Verfahren und eine Einrichtung zur zeitlichen Synchronisation von Feldgeräten gemäss den Oberbegriffen der Patentansprüche 1 und 6.

### Stand der Technik

Feldgeräte werden in verschiedensten Industriezweigen eingesetzt. In manchen Applikationen, z. B. bei Schutzeinrichtungen für elektrische Anlagen, ist es notwendig, dass verschiedene Feldgeräte gleichlaufende Uhren aufweisen. Nur so kann bei einer Störung die korrekte zeitliche Folge von Ereignissen, die durch verschiedene Feldgeräten erfasst werden, bestimmt werden. Diese korrekte Folge ist notwendig, um die Ursache der Störung zu bestimmen und um entsprechende Schutzmassnahmen einzuleiten. So müssen z. B. beim Schutz von elektrischen Unterstationen die Zeitpunkte der Messungen von Spannungen und Strömen mit einer Genauigkeit von 5 Mikrosekunden erfasst werden.

In den einzelnen Feldgeräten werden üblicherweise Quarzoszillatoren mit einer Langzeitstabilität von 1 ppm eingesetzt. Dies hat zur Folge, dass die resultierende Abweichung zwischen einzelnen Feldgeräten alle paar Sekunden korrigiert werden muss. Diese Synchronisation der Feldgeräte geschieht gemäss dem Stand der Technik mittels eines Feldbusses oder spezieller Synchronisationsverbindungen. Zum Beispiel kann beim MVB-Feldbus, wie er in International Electrotechnical Commission, Electric Railway Equipment - Train Communication Network, Clause 3: Multifunction Vehicle Bus. IEC 61375-3/FDIS: 1998-04 offenbart ist, der periodische Start des durch den Busmaster übermittelten Masterrahmens zur Synchronisation verwendet werden. Dieses Signal synchronisiert die lokalen Uhren der einzelnen Feldgeräte. Als lokaler Synchronisationsmechanismus kann z. B. der bekannte "Delay-locked loop" verwendet werden, wie er in John G. Proakis, Digital Communications. McGraw Hill, New York, 3^{rd} Edition 1983, pp. 748-749 offenbart ist.

Die beschriebene Synchronisationsmethode ist jedoch ungeeignet, wenn der verwendete Feldbus, beispielsweise ein nichtdeterministischer Bus, keinen zyklischen Mechanismus aufweist. Die Synchronisationsmethode ist ebenfalls ungeeignet, wenn eine Anlage mehrere Feldbussegmente mit jeweils nicht miteinander synchronisierten Busmastern aufweist.

W. Lewandowski, C. Thomas, GPS Time Transfer, IEEE Proceedings, Vol. 79, no. 7, July 1991, pp. 991-1000 zeigt eine andere Methode zur Übermittlung von Zeitinformation nämlich das satellitenbasierte Global Positioning System GPS. Dieses erlaubt, räumlich auseinanderliegende Geräte untereinander zeitlich zu synchronisieren. Es erfordert jedoch aufwendige Empfänger, in denen Störeinflüsse aufgrund beispielsweise des Abstands zu Satelliten, der Erdrotation und von Signalverzögerungen in der Iono- und der Troposphäre kompensiert werden. Die Verwendung diskreter Funkfrequenzen und die geringe Signalleistung am Empfänger erschweren die Anwendung in einer industriellen Umgebung mit elektromagnetischen Störungen.

### Darstellung der Erfindung

Es ist deshalb Aufgabe der Erfindung, ein Verfahren und eine Einrichtung zur Synchronisation von Feldgeräten der eingangs genannten Art zu schaffen, welche die oben genannten Nachteile behebt.

Diese Aufgabe löst ein Verfahren mit den Merkmalen des Patentanspruches 1 und eine Synchronisationseinrichtung mit den Merkmalen des Patentanspruches 6.

Das erfindungsgemässe Synchronisationsverfahren moduliert ein Referenz-Zeitsignal mittels Spreizband- oder spread-spectrum Modulation. Das modulierte Referenz-Zeitsignal wird von einem Referenzgerät als übertragenes Zeitsignal über ein Übertragungsmedium gesendet. Das Übertragungsmedium sind beispielsweise Radiowellen in Luft oder im Energieverteilnetz der Feldgeräte. Das übertragene Zeitsignal wird in mehreren Feldgeräten jeweils durch einen Empfänger und Demodulator empfangen und zur Synchronisation einer lokalen Uhr verwendet. Ein synchronisiertes Zeitsignal der lokalen Uhr wird in einer lokalen Elektronik zur Bestimmung von Messzeitpunkten verwendet. Referenz- und Feldgeräte sind über einen Kommunikationsbus miteinander verbunden und befinden sich in der gleichen Anlage, vorzugsweise in einem räumlichen Abstand von weniger als 1000 Metern.

Ein wesentlicher Vorteil der Erfindung ist die Unempfindlichkeit der Datenübertragung gegenüber Störeinflüssen. Diese ist eine Folge der Verwendung der Spreizband-Modulation sowie der Tatsache, dass wegen des vergleichsweise geringen Abstands zwischen den Geräten die Signalleistung an den Empfängern hoch gehalten wird. Durch Verwendung der Spreizband-Modulation wird die Wahrscheinlichkeit der Beeinflussung anderer Geräte durch die niedere Spektraldichte des Signals verkleinert. Ein wesentlicher Vorteil der Spreizband-Modulation ist auch, dass die Synchronisationsgenauigkeit mit zunehmender Bandbreite des Signals ebenfalls zunimmt.

In einer bevorzugten Ausführungsform des Erfindungsgegenstandes ist das Referenz-Zeitsignal eine Folge von zeitlich äquidistanten Pulsen. Das durch Spreizband-Modulation erzeugte übertragene Zeitsignal wird dann im Empfänger und Demodulator auf einfache Weise, nämlich durch Korrelation mit einer fixen Sequenz von Pseudozufallszahlen demoduliert. Die Spitzen des Ausgangs des Korrelators bilden die genauen Synchronisationszeitpunkte. Diese Ausführungsform hat den Vorteil, dass sie sehr einfach und kostengünstig realisiert werden kann.

Weitere bevorzugte Ausführungsformen gehen aus den abhängigen Patentansprüchen hervor.

### Kurze Beschreibung der Zeichnungen

Im folgenden wird der Erfindungsgegenstand anhand eines bevorzugten Ausführungsbeispiels, welches in den beiliegenden Zeichnungen dargestellt ist, näher erläutert. Es zeigen:
- Figur 1: ein Referenzgerät der erfindungsgemässen Synchronisationseinrichtung;
- Figur 2: ein Feldgerät der erfindungsgemässen Synchronisationseinrichtung;
- Figur 3: eine erfindungsgemässe Synchronisationseinrichtung; Anordnung von Referenz- und Feldgeräten unter Verwendung von Luft als Übertragungsmedium und
- Figur 4: eine erfindungsgemässe Synchronisationseinrichtung; Anordnung von Referenz- und Feldgeräten unter Verwendung eines elektrischen Energieverteilnetzes als Übertragungsmedium.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

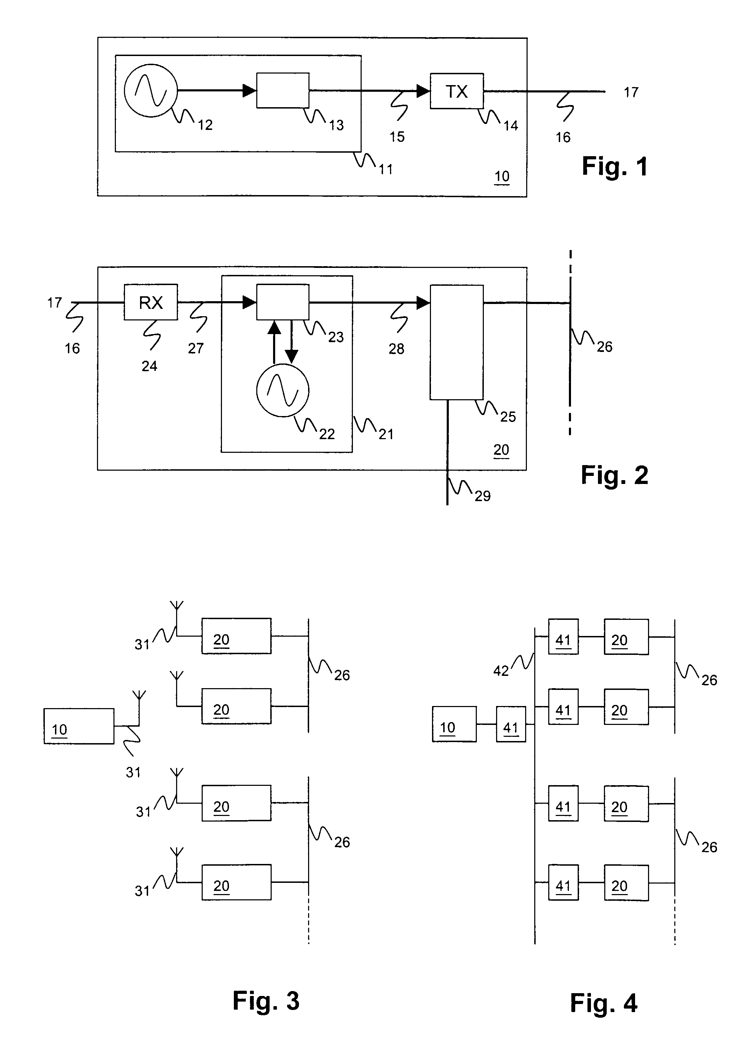

Eine erfindungsgemässe Synchronisationseinrichtung weist ein Referenzgerät 10 und mehrere Feldgeräte 20 auf. Die Figur 1 zeigt ein Referenzgerät 10. Ein Referenzoszillator 12 und eine Auswerteeinheit 13 bilden eine Referenzuhr 11. Der Ausgang der Referenzuhr 11 ist ein Referenz-Zeitsignal 15 und führt auf einen Modulator und Sender 14. Dessen Ausgang ist ein übertragenes Zeitsignal 16 in einem Übertragungsmedium 17. Das Übertragungsmedium können Radiowellen in Luft oder im Energieverteilnetz der Feldgeräte sein.

Die Figur 2 zeigt ein Feldgerät 20. Ein Empfänger und Demodulator 24 ist eingangsseitig an das Übertragungsmedium 17 gekoppelt. Der Ausgang des Empfängers und Demodulators 24 ist ein empfangenes Zeitsignal 27 und führt auf eine lokale Uhr 21. Die lokale Uhr 21 weist einen lokalen Oszillator 22 und eine lokale Auswerteeinheit 23 auf. Der Ausgang der lokalen Uhr 21 ist ein synchronisiertes Zeitsignal 28 und führt auf eine lokale Elektronik 25. Die lokale Elektronik 25 ist an einen Kommunikationsbus 26 gekoppelt und weist Schnittstellen 29 auf. Die Schnittstellen 29 sind typischerweise Messeingänge, können aber unter anderem auch Ausgänge für Stellgrössen sein.

Die erfindungsgemässe Synchronisationseinrichtung funktioniert wie folgt: Die Auswerteeinheit 13 bildet aus dem Ausgangssignal des Referenzoszillators 12 das Referenz-Zeitsignal 15. Dieses wird im Modulator und Sender 14 durch zum Beispiel Spreizband-Modulation moduliert und in einer dem Übertragungsmedium 17 angepassten Form als übertragenes Zeitsignal 16 gesendet. Im Feldgerät 20 wird es durch den Empfänger und Demodulator 24 empfangen und demoduliert und als empfangenes Zeitsignal 27 der lokalen Uhr 21 übermittelt.

Die lokale Uhr 21 bildet das synchronisierte Zeitsignal 28 in folgender Weise: Solange das übertragene Zeitsignal 16 empfangen wird, wird das empfangene Zeitsignal 27 als synchronisiertes Zeitsignal 28 verwendet und die Frequenz des lokalen Oszillators 22 mittels der lokalen Auswerteeinheit 23 laufend dem empfangenen Zeitsignal 27 angepasst. Dazu wird in der lokalen Auswerteeinheit 23 vorteilhafterweise ein eingangs beschriebener delay-locked Loop verwendet. Der delay-locked Loop weist vorzugsweise ein Tiefpassfilter zur Elimination hochfrequenter Störungen des empfangenen Zeitsignals 27 auf.

Durch die erfindungsgemässe Synchronisationseinrichtung sind die einzelnen synchronisierten Zeitsignale 28 aller Feldgeräte 20 synchron zueinander. Falls aufgrund von Störungen der Übertragung das übertragene Zeitsignal 16 vorübergehend nicht empfangen wird, wird das synchronisierte Zeitsignal 28 durch die lokale Auswerteeinheit 23 anhand des lokalen Oszillators 22 gebildet.

Die synchronisierten Zeitsignale 28 der verschiedenen Feldgeräte 20 dienen zur Synchronisation der jeweiligen lokalen Elektronik 25 zueinander. Auf diese Weise werden Messungen und/oder Stellsignale in räumlich auseinanderliegenden Feldgeräten 20 zeitlich miteinander synchronisiert. Die Synchronisation von Messungen geschieht beispielsweise, indem in der lokalen Elektronik 25 enthaltene AD-Wandler mit dem synchronisierten Zeitsignal 28 getaktet werden. In einer anderen Ausführungsform werden Abtastwerte mit einem Zeitstempel versehen, der anhand des synchronisierten Zeitsignals 28 gebildet wird.

Über den Kommunikationsbus 26 tauschen verschiedene Feldgeräte Daten aus, insbesondere Mess- und/oder Stellwerte. In den Figuren 3 und 4 weist der Kommunikationsbus mehrere Segmente auf, die beispielsweise durch einen, nicht gezeigten, übergeordneteten Kommunikationsbus miteinander gekoppelt sind. Selbstverständlich kann der Kommunikationsbus auch nur aus einem einzigen Bussegment bestehen. Dadurch dass die Synchronisation der Feldgeräte mittels der erfindungsgemässen Synchronisationseinrichtung erfolgt, können nichtdeterministische Busse ohne festes Zeitraster eingesetzt werden. Aus demselben Grunde muss keine Synchronisation verschiedener Kommunikationsbusse stattfinden. Die verwendeten Kommunikationsbusse sind vorteilhafterweise kabelbasiert, können aber auch andere Medien wie Funk oder Infrarot verwenden.

In einer vorteilhaften Ausführungsform ist das Referenz-Zeitsignal eine Folge von zeitlich äquidistanten Pulsen. Das durch Spreizband-Modulation erzeugte übertragene Zeitsignal 16 wird dann im Empfänger und Demodulator 24 auf einfache Weise, nämlich mittels eines fixen Korrelators demoduliert. Die Spitzen des Ausgangs des Korrelators bilden die genauen Synchronisationszeitpunkte. Die Genauigkeit des Zeitsignals wird dabei im wesentlichen durch die Bandbreite des Synchronisationssignals bestimmt. Eine Genauigkeit von beispielsweise 5 Mikrosekunden benötigt eine Bandbreite von 200 kHz.

Die Spreizband-Modulation bietet hier den Vorteil, dass sie gegenüber Störungen robuster ist als ein auf einzelnen diskreten Frequenzen beruhendes Zeitsignal.

Figur 3 zeigt eine erste vorteilhafte Anordnung eines Referenzgerätes 10 und mehrerer Feldgeräte 20 der erfindungsgemässe Synchronisationseinrichtung. Die Feldgeräte 20 sind über den Kommunikationsbus 26 miteinander gekoppelt, wobei der Kommunikationsbus 26 beispielsweise verschiedene Segmente aufweist. Das Referenzgerät 10 und die Feldgeräte 20 sind mit Antennen 31 an das Übertragungsmedium gekoppelt. Dabei wird das übertragene Zeitsignal 16 durch elektromagnetische Wellen in der Luft übertragen. Für diese Funk- oder Radioverbindung wird vorteilhafterweise eines der für industrielle Anwendungen reservierten Frequenzbänder aus dem Bereich der Radiofrequenzen also aus dem Bereich zwischen 10 kHz und 300 GHz, verwendet, zum Beispiel ISM (Industrial, Scientific and Medical) bei 2.4 GHz.

Figur 4 zeigt eine zweite vorteilhafte Anordnung eines Referenzgerätes 10 und mehrerer Feldgeräte 20 der erfindungsgemässe Synchronisationseinrichtung. Das Referenzgerät 10 und die Feldgeräte 20 sind mit Kopplungsgeräten 41 an das Übertragungsmedium gekoppelt, welches in diesem Fall ein elektrisches Energieverteilnetz 42 ist. Vorteilhafterweise dient dieses auch zur Energieversorgung der Feldgeräte 20.

Für die beiden Anordnungen gemäss Figuren 3 und 4 gilt, dass sie den räumlichen Bereich einer einzelnen Anlage abdecken und somit eine Ausdehnung von typischerweise 10 bis 1000 Metern haben. Dies hat den Vorteil, dass dadurch die Leistung des übertragenen Zeitsignals am Empfänger und Demodulator 24, im Vergleich zu satellitenbasierten oder anderen grossräumig abgestrahlten Zeitsignalen, relativ hoch gehalten werden kann. Dadurch wird die Übertragung robuster. Da die Feldgeräte ortsfest sind und ihr Standort bekannt ist, vereinfacht sich die Zeitbestimmung, zum Beispiel gegenüber dem GPS.

Ein weiterer Vorteil ergibt sich daraus, dass die Synchronisationseinrichtung einer einzelnen bestimmten Anlage zugeordnet ist: Anlagen unterscheiden sich durch ihre Genauigkeitsanforderungen an die Synchronisation sowie durch die bei ihrem Betrieb auftretenden typischen elektromagnetischen Störungen. In der erfindungsgemässen Synchronisationseinrichtung lassen sich die Leistung, die Frequenz und die Modulationsart des übertragenen Zeitsignals 16 am Sender und Modulator 14 diesen lokalen Gegebenheiten anpassen. Dadurch wird die Übertragung robuster und es können - gegenüber universell einsetzbaren Systemen - einfachere Modulations- und Demodulationsverfahren sowie kostengünstigere Komponenten verwendet werden.

Ein weiterer Vorteil ist, dass in den beiden Anordnungen gemäss Figuren 3 und 4 die Feldgeräte 20 über den Kommunikationsbus 26 miteinander kommunizieren können. Damit kann zum Beispiel der Kommunikationsbus 26 vorwiegend eine absolute Zeitinformation übertragen, währenddem die Synchronisationseinrichtung vor allem nur die genauen Zeitimpulse überträgt, anhand der die lokale Auswerteeinheit 23 eines Feldgerätes 20 die Frequenz des lokalen Oszillators 22 korrigert. Die absolute Zeitinformation beinhaltet beispielsweise Datum und Uhrzeit eines besonderen übertragenen Zeitsignals, das sich von den übrigen Zeitimpulsen unterscheidet. Damit setzt ein Feldgerät 20 bei Empfang eines solchen besonderen Zeitsignals seine lokale Uhr 21 auf die zuletzt empfangene absolute Zeit.

Die erfindungsgemässe Synchronisationseinrichtung erlaubt somit, räumlich auseinanderliegende Feldgeräte auf einfache, kostengünstige und robuste Weise miteinander zu synchronisieren.

### Bezugszeichenliste

- 10: Referenzgerät
- 11: Referenzuhr
- 12: Referenzoszillator
- 13: Auswerteeinheit
- 14: Modulator und Sender
- 15: Referenz-Zeitsignal
- 16: übertragenes Zeitsignal
- 17: Übertragungsmedium
- 20: Feldgerät
- 21: lokale Uhr
- 22: lokaler Oszillator
- 23: lokale Auswerteeinheit
- 24: Empfänger und Demodulator
- 25: lokale Elektronik
- 26: Kommunikationsbus
- 27: empfangenes Zeitsignal
- 28: synchrones Zeitsignal
- 29: Schnittstellen
- 31: Antenne
- 41: Kopplungsgerät
- 42: Elektrisches Energieverteilnetz

## Patentansprüche

1. Verfahren zur zeitlichen Synchronisation von mehreren Feldgeräten 20, die über einen Kommunikationsbus 26 miteinander verbunden sind, dadurch gekennzeichnet,
dass in einem Referenzgerät 10 ein Referenz-Zeitsignal 15 erzeugt wird,
durch Spreizband-Modulation aus dem Referenz-Zeitsignal 15 ein übertragenes Zeitsignal 16 erzeugt wird,
das übertragene Zeitsignal 16 über ein Übertragungsmedium 17 übertragen wird,
in mindestens einem der mehreren Feldgeräte 20 ein Empfänger und Demodulator 24 das übertragene Zeitsignal 16 empfängt und daraus ein empfangenes Zeitsignal 27 bildet,
und das empfangene Zeitsignal 27 zur Synchronisation einer lokalen Uhr 21 des Feldgerätes 20 verwendet wird.

2. Synchronisationsverfahren gemäss Anspruch 1, dadurch gekennzeichnet, dass das übertragene Zeitsignal 16 durch elektromagnetische Wellen mit Radiofrequenzen in Luft übertragen wird.

3. Synchronisationsverfahren gemäss Anspruch 1, dadurch gekennzeichnet, dass das übertragene Zeitsignal 16 durch elektromagnetische Wellen mittels Kopplungsgeräten 41 über ein elektrisches Energieverteilnetz 42 übertragen wird.

4. Synchronisationsverfahren gemäss Anspruch 1, dadurch gekennzeichnet, dass das Referenz-Zeitsignal 15 eine zeitliche Folge von gleichabständigen Pulsen ist und dass das übertragene Zeitsignal 16 im Empfänger und Demodulator 24 durch Korrelation mit einer fixen Sequenz von Pseudozufallszahlen demoduliert wird.

5. Synchronisationsverfahren gemäss Anspruch 1, dadurch gekennzeichnet, dass eine lokaler Oszillator 22 der lokalen Uhr 21 mittels einer lokalen Auswerteeinheit 23 mit dem übertragenen Zeitsignal 16 synchronisiert wird, und dass die lokale Auswerteeinheit 23 bei gestörter Übertragung anhand eines Ausgangssignals des lokalen Oszillators 22 ein synchrones Zeitsignal 28 erzeugt.

6. Synchronisationseinrichtung zur zeitlichen Synchronisation von mehreren Feldgeräten 20, die über einen Kommunikationsbus 26 miteinander verbunden sind,
dadurch gekennzeichnet,
dass die Synchronisationseinrichtung ein Referenzgerät 10 zur Erzeugung eines Referenz-Zeitsignals 15 und zum Senden eines übertragenen Zeitsignals 16 über ein Übertragungsmedium 17 aufweist, wobei das übertragene Zeitsignal 16 eine spreizbandmodulierte Form des Referenz-Zeitsignals 15 ist, und
dass mindestens eines der mehreren Feldgeräte 20 einen Empfänger und Demodulator 24 zum Empfang des übertragenen Zeitsignals 16 aufweist.

7. Synchronisationseinrichtung gemäss Anspruch 6, dadurch gekennzeichnet, dass die Feldgeräte 20 ortsfest sind und der räumliche Abstand der Feldgeräte 20 vom Referenzgerät 10 kleiner als 1000 Meter ist.

8. Synchronisationseinrichtung gemäss Anspruch 6, dadurch gekennzeichnet, dass die Frequenz des übertragenen Zeitsignals 16 im Frequenzband bei 2.4 GHz liegt.
